# EUROPEAN PATENT SPECIFICATION

(11) **EP 2 683 498 B1**
(45) Date of publication and mention of the grant of the patent: **07.10.2020**
(21) Application number: 12706591.0
(22) Date of filing: 29.02.2012
(51) Int. Cl.: B09B 3/00, B29B 17/02, B29B 17/04

(54) **METHOD AND INSTALLATION FOR PROCESSING MATERIALS FROM DISPOSED COOLING EQUIPMENT**
VERFAHREN UND ANLAGE ZUR VERARBEITUNG VON MATERIALIEN AUS ENTSORGTEN KÜHLEINHEITEN
PROCÉDÉ ET INSTALLATION POUR TRAITER DES MATÉRIAUX D'ÉQUIPEMENT DE REFROIDISSEMENT DISPOSÉ

(30) Priority: 08.03.2011 EP 11157275
(43) Date of publication of application: 15.01.2014
(73) Proprietor: RBP Beheer B.V., 4617 JC Bergen op Zoom (NL)
(72) Inventor: NIENOORD, Michiel, NL-2574 AR Den Haag (NL); CRAMERS, Peter Hendrikus Mechtildis, CH-4410 Liestal (CH); DE BODE, Rogier Falco, NL-4617 JC Bergen op Zoom (NL)
(74) Representative: De Vries & Metman
(86) International application number: PCT/EP2012/053467
(87) International publication number: WO 2012/119910

(56) References cited:
- EP-A1- 0 778 254
- EP-A1- 1 215 023
- EP-A1- 1 422 000
- EP-A2- 0 442 113
- WO-A1-02/38295
- US-A- 4 856 289
- US-A- 5 288 929
- US-A1- 2001 013 558

## Description

The present invention relates to a method for processing waste materials from disposed cooling equipment, such as refrigerators, freezers, air conditioners or similar cooling devices which cool by adiabatic evaporation of one or more coolants.

Until 1995 chlorofluorocarbons (CFCs) were used in refrigerators as coolants and as foaming agents for polyurethane foam used as thermal insulation. In particular dichlorodifluoromethane (R12 or Freon 12) was used as a coolant medium, while trichlorofluoromethane (R11 or Freon 11) was typically used as a foaming agent. Since CFCs are believed to be the main cause of the depletion of ozone in the stratosphere, government regulations in most jurisdictions aim to phase out the use of CFCs. When older refrigerators or air conditioners are being disposed of, the used CFCs should be recovered and destroyed.

In modern refrigerators hydrocarbon coolants, such as cyclopentane, are typically used as a substitute for the banned R11, while isobutane is typically used as a substitute for R12. These modern refrigerators have to be disposed of alongside the old refrigerators containing CFCs. These hydrocarbons are flammable and toxic volatile organic compounds, so-called "VOC's", for which governmental regulation impose strict emission limits.

Since disposed CFC type refrigerators and disposed modern refrigerators are processed simultaneously, these hydrocarbon coolants and foaming agents are collected in a mixture with the CFCs of the older refrigerators. For instance, in the Cryo-Condap® process of Air Products and the DuoCondex® process of Messer CFCs and hydrocarbon coolants are recovered by cryogenic condensation. The recovered mixture of CFCs and hydrocarbon coolants and foaming agents is subsequently destroyed.

US 2001/0013558 discloses a method of processing disposals and collecting foaming gas from cooling apparatuses. Cyclopentane and R11 are separated by liquefaction. With liquefaction, the compounds are separated as liquids by consecutively liquefying the compounds of different boiling temperature by gradually lowering the temperature. The obtained cyclopentane fraction contains substantial residual contents of CFCs and must be destroyed as CFC waste. Liquefaction requires high pressures and processing energy.

It is an object of the present invention to provide a more economic method of processing old refrigerators, freezers, air conditioners and similar cooling devices requiring less net energy consumption.

The object of the invention is achieved with a method for processing disposed cooling equipment in accordance with claim 1, the method comprising the following steps:
- removal of coolants from the cooling equipment;
- separating insulation foam and transporting it to a closed environment, where the insulation foam is pulverized to release foaming agents;
- collecting the coolants and collecting the foaming agents released in the closed environment;
- separating the collected foaming agents and the coolants at least into one or more CFC fractions and one or more hydrocarbon fractions by distillation by gradually increasing the temperature.

The coolants can be distilled separately from the foaming agents or as a mixture with the foaming agents. The CFCs and hydrocarbon compounds are separated by distillation. In contrast with liquefaction, distillation consecutively separates compounds of different boiling temperatures by gradually increasing the temperature. Surprisingly, it has been found that this results in high degrees of purity for the hydrocarbon components, the CFC residual content being well below acceptable limits for safe reuse of the hydrocarbons, e.g., as a fuel.

In this context, CFC fractions are fractions comprising the largest part of the CFCs originally contained by the coolants and the foaming agents collected in the closed environment, and hydrocarbon fractions are fractions comprising the largest part of the CFCs originally contained by the coolants and the foaming agent collected in closed environments. The obtained degree of purity of the CFC fractions can be as high as 95 wt.% of the total CFC fraction weight or higher, e.g., at least 98 wt.% or 99 wt.%. The obtained degree of purity of the hydrocarbon fractions can be as high as 95 wt.% of the total hydrocarbon fraction weight or higher, e.g., at least 98 wt.% or 99 wt.%.

In the first step, when coolants are separated, oil and optionally other liquids present in the cooling equipment can also be tapped. If part of the coolants is mixed into the oil, the coolants are separated from the oil.

Besides the insulation foam also other materials of the disposed cooling equipment will generally be separated, e.g., by shredding. Shredding can take place in a second closed environment which enables further recollection of coolants and gases released by the shredded materials.

It has been found that the CFC fractions and the hydrocarbon fractions with high purity can effectively be separated by distillation.

The mixture of the isolated coolants can for example be separated in a first distillation step into a first distillate and a residue forming a first CFC fraction. The first distillate can subsequently be subjected to a second distillation step separating the mixture into a hydrocarbon fraction and a second CFC fraction. The mixture of released foaming agents can be separated in a corresponding manner, e.g., simultaneously in a parallel process.

In an alternative process the isolated coolants and/or the isolated foaming agents can be separately distillated in a batchwise process in consecutive steps in a distillation column into hydrocarbon fractions and CFC fractions.

Alternatively, a mixture of the coolants and the foaming agents can for instance be separated by a distillation process including a first distillation step separating a residue comprising a mixture of cyclopentane and trichlorofluoromethane, and a first distillate comprising a mixture of isobutane and dichlorodifluoromethane, wherein the mixture of cyclopentane and trichlorofluoromethane is subsequently separated by distillation into a residue comprising isobutane as a first hydrocarbon fraction and a distillate comprising dichlorodifluoromethane as a first CFC fraction, while the distillate from the first distillation step is separated by distillation into a residue comprising cyclopentane as a second hydrocarbon fraction and a distillate comprising trichlorofluoromethane as a second CFC fraction.

This order of steps results in hydrocarbon fraction with extremely low residual CFC contents. As a result the hydrocarbon fractions can be combusted without the need of taking additional measures to take care of the CFCs. The order of process steps minimizes energy consumption. The process is even more economical if the hydrocarbon fractions are reused in the course of the process as a fuel.

An alternative distillation process can for instance include a first distillation step isolating a cyclopentane residue as a first hydrocarbon fraction, and a first distillate which is subsequently subjected to a second distillation step isolating a trichlorofluoromethane residue as a first CFC fraction, and a second distillate which is subjected to a third distillation step for separating an isobutane residue as a second hydrocarbon fraction, and a final dichlorodifluoromethane distillate, as a second CFC fraction.

If so desired, the distillation steps can also be carried out in a different order.

If so desired, the distillation process can also include further steps, such as removal of other possible coolants, contaminants or gases used for creating an inert atmosphere.

More than 95 wt%, e.g., more than 98 wt.% of the CFCs of the processed cooling equipment can be isolated for further processing. Virtually all CFCs which are removed from the disposed cooling equipment in the first step can be retained and can be isolated for destruction.

The degree of purity obtained by distillation can be very high. The CFC content in the separated hydrocarbon fractions can be, e.g., at most 1 wt% of the total weight of the fraction or, e.g., at most 0,1 wt.%, for instance 0,06 wt.% or lower.

Before distillation the collected coolants and foaming agents can first be dehumidified. The dehumidification can for example take place in a configuration of two condensers with a compressor in between for providing elevated pressures of 0,5 - 6 bar, e.g., about 1,5 bar. The separated moisture can contain traces of further contaminants.

Also other gases, such as inerting gases or contaminant gases can be removed, e.g., after dehumidification. This can for example take place in a cryocondenser where the gases are cooled to, e.g., -120°C, or lower, to liquefy the mixture. Subsequently, nitrogen and/or oxygen are separated, e.g., by distillation. These gases can be returned to the coolant tap, the shredder or the pulveriser. Optionally, a part of it can be discharged.

The cryogenic condenser can make use of a liquid nitrogen flow, which is subsequently recycled as an inerting gas to the coolant tap and/or pulveriser for reducing the oxygen content in order to reduce or eliminate the risk for explosions or combustion of the volatile organic content within the environment.

When passing these closed environments, the nitrogen flow mixes with the CFCs and hydrocarbon coolant gases as well as oxygen, moisture, carbon dioxide and other possible contaminant gases. To create a closed or semi-closed loop, the flow can subsequently be returned to the condenser. Part of this nitrogen flow can be discharged from the loop to prevent overpressure.

The first closed environment can for example include a gastight shredder. The shredded cooling equipment can subsequently be discharged to one or more separators, such as cyclones and/or windshifters for separation of foam insulation. The separated foam can then be transported to the second closed environment formed by a gastight powder mill or pulveriser.

The method according to the invention can effectively be carried out in an installation for processing disposed cooling equipment comprising a gastight coolant tap for drawing off coolants from the disposed cooling equipment, a gastight insulation foam pulveriser, one or more gas transport lines from the coolant tap and/or from the pulveriser to a separation unit comprising separate outlets for one or more CFC fractions and one or more hydrocarbon gas fractions.

The separation unit can for instance comprise a condenser and a distillation unit between the condenser and the outlets. The condenser can for example be a cryogenic condenser. In that case, the installation can comprise a closed nitrogen circuit with a liquid nitrogen flow path via the cryogenic condenser and a nitrogen gas return path via the pulveriser, the coolant tap and/or the shredder as an inerting gas for reducing the relative oxygen content.

As set out above the separation unit can comprise one or more distillation units for the batchwise or parallel or serial individual separation of at least cyclopentane, isobutane and dichlorodifluoromethane and trichlorofluoromethane.

The present invention will be elucidated with reference to the figures wherein:
- Figure 1:: shows schematically an exemplary embodiment of a process according to the present invention;
- Figure 2:: shows schematically a separation unit for use in the process of Figure 1;
- Figure 3:: shows schematically an alternative separation unit.

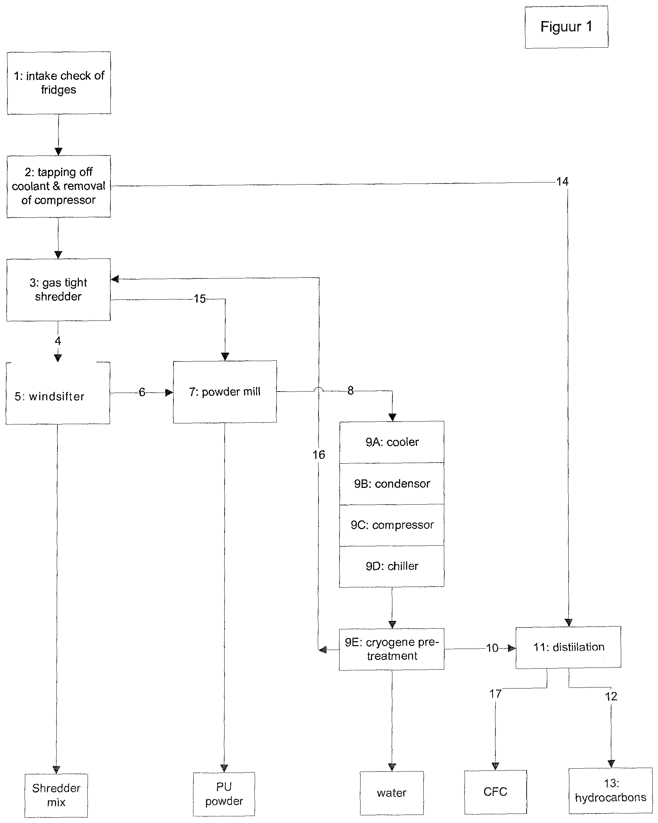

Figure 1 shows schematically the various steps of a method of processing materials of used refrigerators or other types of cooling equipment using coolant gases. The disposed refrigerators are first checked at an intake station 1. Subsequently, the refrigerators are transported to a coolant removal station 2 for tapping off coolants and oil. In older refrigerators these coolants typically include trichlorofluoromethane, generally referred to as R12. In more modern refrigerators isobutane is used. The mixture of R12 and isobutane is subsequently fed to a distillation unit 11.

The refrigerators are subsequently transported to a gastight shredder 3 where the materials are shredded. These materials include metal casing materials, plastic interior parts, motor parts and electrics, insulation foam, etc. Insulation foams from refrigerators typically are polyurethane foams. The foam structure is obtained by using a foaming agent during curing of the polyurethane. Particularly in older refrigerators these blowing agents include CFCs, particularly R11. The materials also include remnants of coolants. The shredder 3 is gastight, so it forms a closed environment where any released coolant gases or foaming agents are collected. To reduce or eliminate a risk of explosion in the gastight shredder 3, the oxygen content in the shredder 3 is lowered by feeding inert gases, in particular nitrogen, into the shredder 3.

Via a closed line 4 the mixture of shredded materials is fed into a windsifter 5. In the windsifter 5 insulation foam is separated from the other shredded materials by airflow. The isolated foam is then transported via a closed line 6 to a gastight powder mill or pulveriser 7. The other materials are discharged as a mixture for further processing. The gastight pulveriser 7 forms a closed environment where any foaming agents released from pulverization of the insulation foam are collected. As in the shredder 3 the oxygen content in the pulveriser 7 is kept low by feeding inert gases from the shredder 3 via a closed line 15 into the pulveriser 7 in order to reduce the risk of explosion. Powdered insulation foam is discharged and the collected gases are fed via a closed line 8 to dehumidifier station 9 comprising a cooler 9A, a condenser 9B, a compressor 9C and a chiller 9D, reducing the temperature to about 5°C at an elevated pressure of about 1,5 bar. Moisture and contaminants are withdrawn from the mixture and discharged.

The remaining gas mixture comprises a mixture of R11 and cyclopentane and is subsequently fed into a cryogenic condenser 9E. Here the gases are cooled to cryogenic conditions. This way nitrogen is separated from the liquefied R11 and cyclopentane coolants. The nitrogen is returned as a gas via a closed gas line 16 to the shredder 3 and the powder mill 7 for inerting the internal atmosphere within the shredder 3 and the powder mill 7.

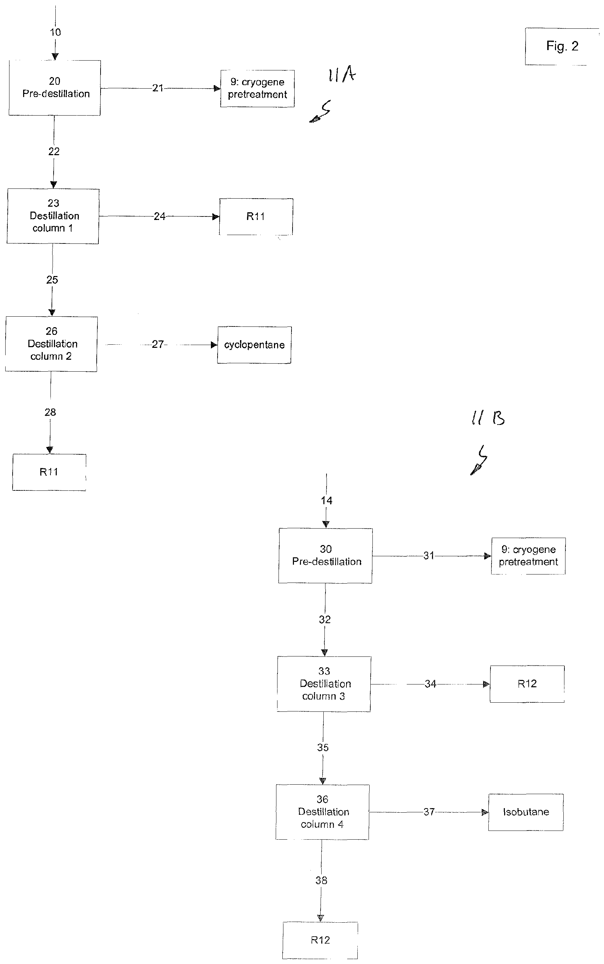

The liquefied mixture is then transported via a closed line 10 to a distillation unit 11, shown in more detail in Figure 2.

Figure 2 is a schematic representation of the process taking place within the separation unit 11. The separation unit 11 comprises two parallel tracks 11A, 11B both comprising a pre-distillation unit 20, 30 for the removal of residual nitrogen and oxygen, and distillation columns 23, 26, 33 and 36 for the subsequent separation of the CFCs and hydrocarbon gases.

The liquid mixtures of CFCs and hydrocarbon gases may initially contain residual contents of nitrogen and oxygen, typically in an amount of about 0,5 wt.%. In this exemplary embodiment, the R11 / cyclopentane mixture from the cryogenic condenser 9E is first fed via a closed line 10 to the pre-distillation unit 20 to remove these residual contents. The N2 / 02 distillate is discharged from the pre-distillation unit 20 via a closed line 21 and then returned to the cryogen condenser 9E, while the separated CFCs and hydrocarbons are fed to the first distillation column 23 via a closed line 22.

The mixture is fed into the distillation column 23 at a temperature of about 24 °C and a pressure of about 2 bar. The mixture is separated into a residue and a distillate. The residue consisting mainly of CFCs is discharged via closed line 24 into a CFC-pressure vessel to be packed into gastight containers for transportation to a destruction unit. The distillate is a first hydrocarbon fraction comprising more than 95 wt.% cyclopentane and comprising at most 1 wt.% CFCs. This distillate is fed via closed line 25 into a second distillation column 26 where it is separated into a residue and a distillate. The distillate consisting mainly of CFCs (particularly R11) is discharged via closed line 28 into a CFC-pressure vessel to be packed into gastight containers for transportation to a destruction unit. The residue is the final cyclopentane fraction comprising less than 0,1 wt. % CFCs. The cyclopentane fraction is discharged via closed gas line 27 for reuse as a fuel in a power station in the described chain of process steps.

The R12 / isobutane mixture from the tapping off coolant station 2 (shown in Figure 1) is transported via line 14 to the pre-distillation unit 30. The N2 / 02 distillate is discharged from the pre-distillation unit 30
and then returned to the cryogene condenser 9 (shown in Figure 1) via a closed line 31, while the separated CFCs and hydrocarbons are fed to the third distillation column 33 via a closed line 32.

The mixture is fed into the distillation column 33 at a temperature of about 4 °C and a pressure of about 1,5 bar. The mixture is separated into a residue and a distillate.

The residue consisting mainly of CFCs is discharged via closed line 34 into a CFC-pressure vessel to be packed into gastight containers for transportation to a destruction unit. The distillate is a hydrocarbon fraction comprising more than 95 wt.% isobutane and comprising at most 1 wt.% CFCs. This distillate is fed via closed line 35 into distillation column 36 where is separated into a residue and a distillate.

The distillate consisting mainly of CFCs (particularly R12) is discharged via closed line 38 into a CFC-pressure vessel to be packed into gastight containers for transportation to a destruction unit. The residue is the final isobutane fraction comprising less than 0,1 wt. % CFCs. It is discharged via closed gas line 37 for reuse as a fuel in a power station in the described chain of process steps.

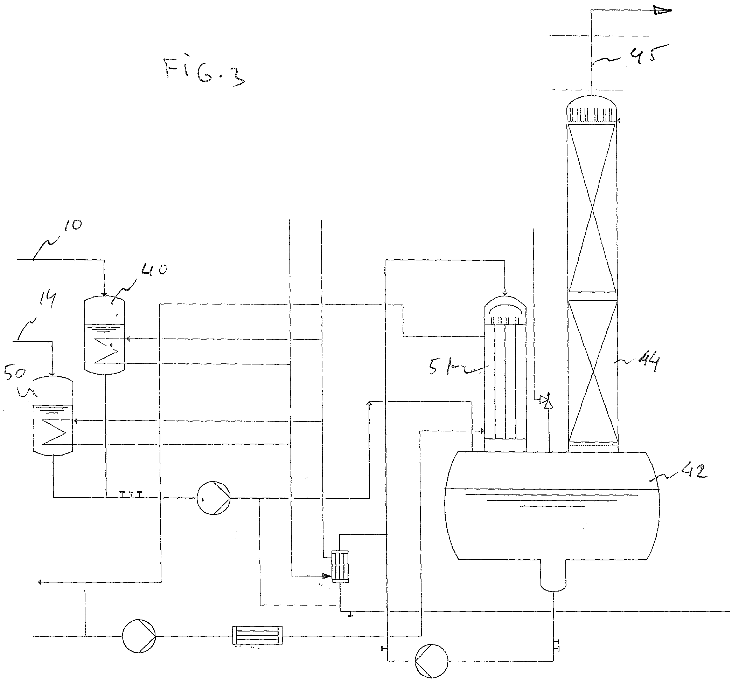

Figure 3 shows a further alternative arrangement of a separation unit. In this arrangement the distillation of the R11 / cyclopentane mixture from the cryogen pretreatment unit 9E (shown in Figure 1) and the distillation of the R12 / isobutane mixture from the tapping off coolant station 2 (shown in Figure 1) are separately performed in a batchwise process.

The R11 / cyclopentane mixture from the cryogen pretreatment unit (shown in Figure 1) is collected in pressure vessel 40. When processed, the mixture is fed to distillation buffer tank 42. The buffer tank 42 is part of a loop comprising a preheater 51. On top of the buffer vessel 42 is a distillation column 44. In a first process step conditions are controlled in such way that cyclopentane of the required purity is produced. In a second process step conditions are controlled in such way that an R11 fraction is produced.

The R12 / isobutane mixture from the tapping off coolant station 2 (shown in Figure 1) is collected in pressure vessel 50. When processed the mixture is fed to distillation buffer tank 42. In a first process step conditions are controlled in such way that the CFCs are produced. In the second process step conditions are controlled in such way isobutane of the required purity is produced.

The distillate consisting mainly of R12 is discharged via a closed gas line into a CFC-pressure vessel to be packed into gastight containers for transportation to a destruction unit.

The distillate consisting of isobutane of purity > 99,9 % and cyclopentane of purity > 99,9 % is discharged via closed gas line 45 for reuse as a fuel in a power station in the described chain of process steps.

## Claims

1. Method for processing disposed cooling equipment, the method comprising the following steps:
- removal of coolants from the cooling equipment;
- separating insulation foam and transporting it to a closed environment (7), where the insulation foam is pulverized to release foaming agents;
- collecting the coolants and collecting the foaming agents released in the closed environment (7);
- separating the collected foaming agents and the coolants at least into one or more CFC fractions and one or more hydrocarbon fractions by distillation by gradually increasing the temperature.

2. Method according to claim 1 wherein the isolated coolants and/or the isolated foaming agents are separated in a first distillation step into a first distillate and a residue forming a first CFC fraction, wherein the first distillate is subsequently subjected to a second distillation step separating the mixture into a hydrocarbon fraction and a second CFC fraction.

3. Method according to claim 1 wherein the isolated coolants and the isolated foaming agents are separately distillated in consecutive steps in a distillation column (23, 26, 33, 36) into hydrocarbon fractions and CFC fractions.

4. Method according to claim 1 wherein in the distillation includes a first distillation step isolating a cyclopentane residue as a first hydrocarbon fraction, and a first distillate which is subsequently subjected to a second distillation step isolating a trichlorofluoromethane residue as a first CFC fraction, and a second distillate which is subjected to a third distillation step for separating an isobutane residue as a second hydrocarbon fraction, and a final dichlorodifluoromethane distillate, as a second CFC fraction.

5. Method according to claim 1 wherein in the distillation includes a first distillation step separating a residue comprising a mixture of cyclopentane and trichlorofluoromethane, and a first distillate comprising a mixture of isobutane and dichlorodifluoromethane, wherein the mixture of cyclopentane and trichlorofluoromethane is subsequently separated by distillation into a residue comprising isobutane as a first hydrocarbon fraction and a distillate comprising dichlorodifluoromethane as a first CFC fraction, while the distillate from the first distillation step is separated by distillation into a residue comprising cyclopentane as a second hydrocarbon fraction and a distillate comprising trichlorofluoromethane as a second CFC fraction.

6. Method according to any one of the preceding claims wherein the CFC content in the hydrocarbon fractions is at most 1 wt% of the total weight of the fraction, e.g., at most 0,1 wt. %.

7. Method according to any one of the preceding claims wherein the collected gases from the first and second environment (3, 7) are first fed into a condenser (9E) for isolation of a mixture of CFCs and hydrocarbon coolant gases, and wherein subsequently the mixture of CFCs and hydrocarbon coolant gases is separated, into the one or more CFC fractions and the one or more hydrocarbon gas fractions.

8. Method according to claim 7 wherein the condenser is a cryogenic condenser (9E) using a liquid nitrogen flow, which is subsequently recycled as a gas to the first and/or second closed environment.

9. Method according to claim 8 wherein the nitrogen flow is subsequently returned to the condenser (9E) in a closed loop.

10. Method according to any one of the preceding claims wherein the first closed environment (3) includes a gastight shredder, and wherein shredded cooling equipment is discharged to one or more cyclones for separation of foam insulation, which is subsequently transported to the second closed environment (7) formed by a gastight powder mill.

## Patentansprüche

1. Verfahren zur Verarbeitung von entsorgten Kühlanlagen, wobei das Verfahren die folgenden Schritte umfasst:
- Entfernen von Kältemitteln aus den Kühlanlagen;
- Abtrennen des Isolierschaums und Transportieren desselben in eine geschlossene Umgebung (7), wo der Isolierschaum zum Freisetzen von Schäummittel pulverisiert wird;
- Auffangen der Kältemittel und Auffangen der in der geschlossenen Umgebung (7) freigesetzten Schäummittel;
- Trennen der aufgefangenen Schäummittel und der Kältemittel in mindestens eine oder mehrere CFK-Fraktionen und eine oder mehrere Kohlenwasserstoff-Fraktionen mittels Destillation durch allmähliches Erhöhen der Temperatur.

2. Verfahren nach Anspruch 1, wobei die isolierten Kältemittel und/oder die isolierten Schäummittel in einem ersten Destillationsschritt in ein erstes Destillat und einen Rest getrennt werden, der eine erste CFK-Fraktion bildet, wobei das erste Destillat anschließend einem zweiten Destillationsschritt unterzogen wird, in dem das Gemisch in eine Kohlenwasserstoff-Fraktion und eine zweite CFK-Fraktion getrennt wird.

3. Verfahren nach Anspruch 1, wobei die isolierten Kältemittel und die isolierten Schäummittel in einer Destillationskolonne (23, 26, 33, 36) in aufeinanderfolgenden Schritten getrennt zu Kohlenwasserstoff-Fraktionen und CFK-Fraktionen destilliert werden.

4. Verfahren nach Anspruch 1, wobei die Destillation einen ersten Destillationsschritt umfasst, bei dem ein Cyclopentanrest als eine erste Kohlenwasserstoff-Fraktion und ein erstes Destillat isoliert wird, das anschließend einem zweiten Destillationsschritt unterzogen wird, bei dem ein Trichlorfluormethanrest als eine erste CFK-Fraktion und ein zweites Destillat isoliert wird, das einem dritten Destillationsschritt zum Abscheiden eines Isobutanrests als eine zweite Kohlenwasserstoff-Fraktion und eines endgültigen Dichlordifluormethandestillats als eine zweite CFK-Fraktion unterzogen wird.

5. Verfahren nach Anspruch 1, wobei die Destillation einen ersten Destillationsschritt umfasst, bei dem ein Rest, der ein Gemisch aus Cyclopentan und Trichlorfluormethan umfasst, und ein erstes Destillat, das ein Gemisch aus Isobutan und Dichlordifluormethan umfasst, voneinander getrennt werden, wobei das Gemisch aus Cyclopentan und Trichlorfluormethan anschließend durch Destillation in einen Rest, der Isobutan als eine erste Kohlenwasserstoff-Fraktion umfasst, und ein Destillat, das Dichlordifluormethan als eine erste CFK-Fraktion umfasst, getrennt wird, während das Destillat aus dem ersten Destillationsschritt durch Destillation in einen Rest, der Cyclopentan als eine zweite Kohlenwasserstoff-Fraktion umfasst, und ein Destillat, das Trichlorfluormethan als eine zweite CFK-Fraktion umfasst, getrennt wird.

6. Verfahren nach einem der vorstehenden Ansprüche, wobei der CFK-Gehalt in den Kohlenwasserstoff-Fraktionen höchstens 1 Gew.-% des Gesamtgewichts der Fraktion, z. B. höchstens 0,1 Gew.-% beträgt.

7. Verfahren nach einem der vorstehenden Ansprüche, wobei die aus der ersten und zweiten Umgebung (3, 7) aufgefangenen Gase zuerst einem Kondensator (9E) zur Isolation eines Gemischs von CFK und Kohlenwasserstoff-Kältemittelgasen zugeführt werden, und wobei das Gemisch aus CFK und Kohlenwasserstoff-Kältemittelgasen anschließend in die eine oder die mehreren CFK-Fraktionen und die eine oder die mehreren Kohlenwasserstoffgasfraktionen getrennt wird.

8. Verfahren nach Anspruch 7, wobei der Kondensator ein Tieftemperatur-Kondensator (9E) ist, der einen Flüssigstickstoffstrom verwendet, welcher anschließend als Gas in die erste und/oder zweite geschlossene Umgebung zurückgeführt wird.

9. Verfahren nach Anspruch 8, wobei der Stickstoffstrom anschließend in einer geschlossenen Schleife zum Kondensator (9E) zurückgeführt wird.

10. Verfahren nach einem der vorstehenden Ansprüche, wobei die erste geschlossene Umgebung (3) einen gasdichten Schredder umfasst und wobei die zerkleinerte Kühlanlage in einen oder mehrere Zyklonabscheider ausgetragen wird, um Schaumisolierung abzuscheiden, die anschließend zur zweiten geschlossenen Umgebung (7) transportiert wird, welche durch eine gasdichte Pulvermühle gebildet ist.

## Revendications

1. Procédé pour traiter un équipement de refroidissement mis au rebut, le procédé comprenant les étapes suivantes :
- le retirait de fluides caloporteurs de l'équipement de refroidissement ;
- la séparation d'une mousse d'isolation et son transport jusqu'à un environnement fermé (7), où la mousse d'isolation est pulvérisée pour libérer des agents moussants ;
- la collecte des fluides caloporteurs et la collecte des agents moussants libérés dans l'environnement fermé (7) ;
- la séparation des agents moussants collectés et des fluides caloporteurs au moins en une ou plusieurs fractions de chlorofluorocarbones, CFC, et une ou plusieurs fractions d'hydrocarbures par distillation par l'augmentation progressive de la température.

2. Procédé selon la revendication 1 dans lequel les fluides caloporteurs isolés et/ou les agents moussants isolés sont séparés dans une première étape de distillation en un premier distillat et un résidu formant une première fraction de CFC, dans lequel le premier distillat est par la suite soumis à une deuxième étape de distillation séparant le mélange en une fraction d'hydrocarbures et une seconde fraction de CFC.

3. Procédé selon la revendication 1 dans lequel les fluides caloporteurs isolés et les agents moussants isolés sont distillés séparément par étapes consécutives dans une colonne de distillation (23, 26, 33, 36) en fractions d'hydrocarbures et en fractions de CFC.

4. Procédé selon la revendication 1 dans lequel dans la distillation inclut une première étape de distillation isolant un résidu de cyclopentane en tant que première fraction d'hydrocarbures, et un premier distillat qui est par la suite soumis à une deuxième étape de distillation isolant un résidu de trichlorofluorométhane en tant que première fraction de CFC, et un second distillat qui est soumis à une troisième étape de distillation pour séparer un résidu d'isobutane en tant que seconde fraction d'hydrocarbures, et un distillat final de dichlorodifluorométhane, en tant que seconde fraction de CFC.

5. Procédé selon la revendication 1 dans lequel dans la distillation inclut une première étape de distillation séparant un résidu comprenant un mélange de cyclopentane et de trichlorofluorométhane, et un premier distillat comprenant un mélange d'isobutane et de dichlorodifluorométhane, dans lequel le mélange de cyclopentane et de trichlorofluorométhane est par la suite séparé par distillation en un résidu comprenant de l'isobutane en tant que première fraction d'hydrocarbures et un distillat comprenant du dichlorodifluorométhane en tant que première fraction de CFC, tandis que le distillat issu de la première étape de distillation est séparé par distillation en un résidu comprenant du cyclopentane en tant que seconde fraction d'hydrocarbures et un distillat comprenant du trichlorofluorométhane en tant que seconde fraction de CFC.

6. Procédé l'une quelconque des revendications précédentes dans lequel la teneur en CFC dans les fractions d'hydrocarbures est d'au plus 1 % en poids du poids total de la fraction, par ex., au plus de 0,1 % en poids.

7. Procédé l'une quelconque des revendications précédentes dans lequel les gaz collectés à partir du premier et du second environnement (3, 7) sont d'abord introduits dans un condenseur (9E) pour isoler un mélange de CFC et de gaz de fluides caloporteurs d'hydrocarbures, et dans lequel par la suite le mélange de CFC et de gaz de fluides caloporteurs d'hydrocarbures est séparé en lesdites une ou plusieurs fractions de CFC et lesdites une ou plusieurs fractions de gaz d'hydrocarbures.

8. Procédé selon la revendication 7 dans lequel le condenseur est un condenseur cryogénique (9E) utilisant un courant d'azote liquide, qui est par la suite recyclé sous forme gazeuse vers le premier et/ou le second environnement fermé.

9. Procédé selon la revendication 8 dans lequel le flux d'azote est par la suite renvoyé au condenseur (9E) dans une boucle fermée.

10. Procédé l'une quelconque des revendications précédentes dans lequel le premier environnement fermé (3) inclut une déchiqueteuse étanche aux gaz, et dans lequel un équipement de refroidissement déchiqueté est évacué vers un ou plusieurs cyclones pour la séparation d'une isolation en mousse, qui est par la suite transportée vers le second environnement fermé (7) formé par un broyeur à poudre étanche aux gaz.
